# EUROPEAN PATENT SPECIFICATION

(11) **EP 4 470 761 B1**
(45) Date of publication and mention of the grant of the patent: **18.11.2026**
(21) Application number: 23382537.1
(22) Date of filing: 02.06.2023
(51) Int. Cl.: B29C 70/54, B29D 99/00, F03D 1/06, B29C 70/48

(54) **METHOD OF MANUFACTURING A SPAR CAP FOR A WIND TURBINE ROTOR BLADE AND STACK ALIGNMENT DEVICE**
VERFAHREN ZUR HERSTELLUNG EINES HOLMGURTS FÜR EIN WINDTURBINENROTORBLATT UND STAPELAUSRICHTUNGSVORRICHTUNG
PROCÉDÉ DE FABRICATION D'UN CAPUCHON DE LONGERON POUR PALE DE ROTOR D'ÉOLIENNE ET DISPOSITIF D'ALIGNEMENT D'EMPILEMENT

(43) Date of publication of application: 04.12.2024
(73) Proprietor: Nordex Energy SE & Co. KG, 22419 Hamburg (DE); Nordex Blades Spain SA., 31440 Lumbier, Navarra (ES)
(72) Inventor: FEILERT, Rene, 18057 Rostock (DE); BARROS, Andre, 18057 Rostock (DE); KHAN, Jehanzeb, 18057 Rostock (DE); ABAURREA, Unai, 31440 Lumbier, Navarra (ES); DOMENO, Oier, 31440 Lumbier, Navarra (ES); IGLESIAS ROCES, Santiago, 31440 Lumbier, Navarra (ES)
(74) Representative: Völkl Siebenson Patentanwälte - Partnerschaft mbB

(56) References cited:
- EP-A1- 3 470 198
- WO-A1-2022/206155
- CN-A- 112 976 604
- US-A- 1 184 259
- US-A- 955 219
- US-A1- 2005 045 042
- US-A1- 2016 263 843

## Description

The invention relates to a method for manufacturing a spar cap for a wind turbine rotor blade. Furthermore, the invention relates to a stack alignment device.

Wind turbine rotor blades typically comprise a shell defining the aerodynamic contour. The shell is typically made of one or more fiber reinforced composite materials. These materials make it possible to give the rotor blades structural, mechanical properties despite their lightweight design.

To ensure stiffness, strength, buckling resistance and/or large lengths of the rotor blades, structural members are typically manufactured that extend inside the wind turbine rotor blades over a large part of the rotor blade length from a region close to the rotor blade root to a region close to the rotor blade tip. In other words, such structural members follow, for example, a contour of a rotor blade or a rotor blade half-shell in the longitudinal direction. Such structural elements are, for example, spar caps or spar beams. Spar caps or the caps of spar beams therefore typically comprise a fiber material with a high tensile strength comprising unidirectionally oriented fiber strands, such as glass or carbon fibers, embedded in a matrix material like resin. The structural members are typically built up in layers, with either dry fiber plies being provided with the matrix material in a vacuum infusion process or prefabricated layers of fibers embedded in the matrix material (referred to as prepregs) being arranged on top of each other and then joined in an autoclave process.

As another possibility for manufacturing the structural elements it is known to use pultruded planks (also named rods or bars) made of a cured fiber-reinforced material. Pultruded planks consist of a fiber-reinforced material produced in a pultrusion process. Due to the pultrusion process, the glass or carbon fibers embedded in the resin matrix are aligned almost exactly parallel to each other. Typically, these planks are produced as semi-finished products in the pultrusion process and already cured before further processing. To produce structural members like a rotor blade spar cap, for example, several planks are placed in a mold as side-by-side stacks to allow conformity to the lengthwise and chordwise curvature of the rotor blade. Subsequently, one or more further process steps may follow, such as resin infusion. A mold configured to form such a structural element typically comprises an inner mold surface that is curved and/or inclined along its length and width, depending on the aerodynamic shape of the wind turbine rotor blade. However, such a mold shape involves challenges during manufacturing with stacked planks, since the planks in the stacks have a tendency to move or slide on steeply inclined sections of the mold due to gravity, and maintaining the stacks in their intended positions can be difficult. The production of rotor blade spar caps or entire rotor blades is described, for example, in WO 2015/067280 A1 or WO 2015/067281 A1.

US 2016/263843 A1 describes a method for manufacturing a wind turbine blade in a blade mold. The wind turbine blade comprises a plurality of elongate reinforcing structures, each consisting of a stack of strips made of fibre-reinforced polymeric material. The method includes stacking the strips of fibre-reinforced polymeric material to form multiple stacks, each defining a longitudinal axis. These stacks are then aligned relative to one another in an alignment zone located outside the blade mold. The stacks are supported in such a way that their relative alignment is maintained. Subsequently, the multiple stacks are transferred simultaneously into the blade mold while preserving their relative alignment during the transfer. Finally, the stacks are integrated with other blade materials within the blade mold. An apparatus suitable for carrying out this method is also disclosed.

EP 3 470 198 A1 relates to a method for producing a rotor blade chord for a rotor blade of a wind turbine in a mold. The method involves providing a stack of planks that are predeterminedly aligned with respect to one another. A lifting beam is provided, to which multiple retaining clips for securing the stack can be connected. The retaining clips are attached to the stack along its longitudinal axis in such a way that the stack is positively enclosed by the upper side and both lateral sides, thereby maintaining the predetermined alignment of the planks. A fixing device is attached to each retaining clip so that the stack is held by the retaining clips from at least the underside, ensuring that the predetermined alignment of the planks is maintained together with the retaining clips. The stack is then transported to the mold and inserted into the mold using the lifting beam. The invention also concerns a system for producing a rotor blade chord.

One task underlying the invention is to provide a concept for the manufacturing of a spar cap that contributes to efficient production.

According to a first aspect, a method is disclosed for manufacturing a spar cap for a wind turbine rotor blade in a mold. The method comprises the following steps:
- providing several stacks of pultruded planks, wherein each stack comprises a main extension direction, a top side and a bottom side, wherein the stacks are arranged side by side along their main extension direction,
- mounting a stack alignment device onto the stacks, the stack alignment device being configured to put a distance between each adjacent two stacks, such that a gap is formed between each adjacent two stacks and the stacks remain in predetermined alignment,
- transferring the stacks with the stack alignment device into a mold, thereby maintaining the predetermined alignment,
- removing the stack alignment device, and
- connecting the stacks by means of resin infusion in the mold to manufacture the spar cap.

The invention provides a method in which stacked, pultruded planks are transferred to a mold, wherein at least one stack alignment device is used to ensure and maintain a predetermined orientation and/or alignment of the stacked, pultruded planks during transfer and positioning of the stacks. The stack alignment device prevents the planks from slipping or losing their intended position in the stacks. Typically, the stacks are initially stored side by side in a storage area having a flat bearing surface and then they are altogether and at the same time transferred into the mold having a curved inner surface. The stack alignment device is positioned before the stacks are moved into the mold and is removed after the transfer of the stacks. After removal of the stack alignment device, the stacks remain at the predetermined orientation within the mold, i.e. without the original alignment of the stacks and planks to each other being changed. In the mold, the stacks of pultruded planks, i.e. all pultruded planks, are fixedly connected to each other by bonding due to resin infusion. The connected, pultruded planks form a half-product, i.e. the spar cap, which can be further used in a subsequent manufacturing process, e.g. in the manufacturing of a half-shell of a wind turbine rotor blade.

The invention provides several advantages. For example, the invention avoids the need to laboriously stack and align the individual planks in the mold itself as the planks/stacks are already aligned in advance in a predetermined orientation relative to one another and inserted unchanged into the mold in this orientation, thanks to the stack alignment device. Due to the pre-aligning of the stacks in the storage area the cycle time in the spar cap mold can be reduced.

Essentially, the stack alignment device does not remain in the final (half-)product, i.e. the spar cap. Rather, the stack alignment device is removed before the planks are connected by vacuum infusion. In other words, the stack alignment device is just a manufacturing tool. Thus, an improved, i.e. comparatively better, mechanical structure of the final product is achieved, since there is no stack alignment device impacting the mechanical and structural properties. For example, there are no material differences generated by the stack alignment device if it would remain in the final manufactured product. Furthermore, the stack alignment device does not need to be prepared for remaining in the final product, e.g. providing holes for resin to pass through for better connection. This also contributes to the reduction of costs.

For the movement/transfer to the mold, the stacks are made available in the storage area, for example with the aid of storage racks or frames. The stacks are typically stored and positioned flat on one or more of these storage racks or frames. The storage racks or frames, for example, are at a distance to each other along the length of the pultruded planks/stacks, wherein the stacks lie on the racks or frames to be supported and to be easily transferred to the mold afterwards. The movement and transfer of the stacks can be done by very simple lifting means, e.g. a sling traverse, a lifting beam or a lifting traverse. The lifting means, for example, may comprise several holding means like ropes or chains, which are at a distance to each other lengthwise and surround the stacks transversely to its longitudinal direction in order to lift the stacks. In other words, each holding means, e.g. each chain or rope, is adapted to the outer contour of all the stacks to surround them from at least three sides, particularly the underside and the lateral sides.

A stack comprises one or more planks being arranged on top of each other. For example, one stack has six planks. For example, six stacks are arranged adjacent to each other. For example, each stack may have six planks. The pultruded planks of a stack may have different designs, for example, the individual planks may have different lengths, thicknesses, sheathing or the like.

The planks are elongated, rod-shaped and/or plate-shaped pultruded planks of typically large length, for example 50 m to 80 m or more. A plank features a fiber-reinforced material, for example glass fibers or carbon fibers embedded in a polymer matrix. The planks are also referred to as a reinforcing element or reinforcing structural element.

The mold has a corresponding, desired shape that defines the outer contour of the spar cap.

According to an embodiment the stack alignment device is mounted from the top sides of the stacks. For example, the stack alignment device is inserted, pushed or pressed in between the stacks from their top sides. This helps to easily remove the stack alignment device from the top side, in particular when the stacks are placed into the mold.

According to an embodiment, after the step of transferring the stacks and prior to the step of removing the stack alignment device, spacer elements are placed between each adjacent two stack in the respective gap, the spacer elements being configured to remain in the manufactured spar cap. The spacer elements may be simple, small elements to maintain a certain distance between two adjacent stacks of planks. In contrast to the alignment device, they are specially designed to remain in the final (half-)product. For example, the spacer elements help that, during resin infusion, resin can easily reach the regions between two stacks to bond them together.

According to an embodiment, the stack alignment device comprises a horizontal base and several vertical walls extending from the horizontal base, wherein the horizontal base extends traverse to the main extension direction of the stacks and covers the top sides of the stacks at least partially and wherein two adjacent vertical walls and a respective portion of the horizontal base define a U-shaped receiving section, each U-shaped receiving section being open towards the bottom sides of the stacks and being configured to accommodate a stack of planks.

The horizontal base extends along the top sides of the stacks, traverse to the main extension directions of the stacks. In particular, the horizontal base lies on the top sides and is preferably flat or plate-shaped. The vertical walls put and maintain the defined distance between each two stacks. The vertical walls are preferably flat or plate-shaped. Alternatively they may be teeth-shaped. In other words, the stack alignment device is comb-shaped and has a plurality of teeth. Preferably, the stack alignment device is made as one piece. For example, the stack alignment device is made from a metal, like steel.

Such a stack alignment device provides an easily manufactured and effective element to guarantee the predetermined alignment. In particular, a form-fit connection to the stacks is ensured to hold the stacks in the intended orientation and alignment.

According to an embodiment, the horizontal base comprises a handle element extending away from the top sides of the stacks. Thus, easy handling of the alignment device is ensured. For example, after having the stack placed in the mold, the alignment device can easily be removed from the stacks by simply pulling it out of the stacks.

According to an embodiment, the vertical walls of the stack alignment device differ with respect to their length, and a length of each vertical wall is adapted to a contour of the inner surface of the mold. The inner contour of the mold, i.e. the mold surface, corresponds to the outer contour of the spar cap or the (half-)shell of the wind turbine rotor blade. By this solution, the stack alignment device adopts to the curved contour of the spar cap and to the final blade (half) shell.

According to an embodiment, each vertical wall has a length that is greater than a maximum thickness of the stacks. Thus, the stack alignment device can be easily removed from the stacks in the mold. In the storage area, the stack alignment device is mounted onto the stacks. At this stage, since the vertical walls are longer than the maximum thickness, the vertical walls extend out of the stacks at the bottom sides (or undersides) of the stacks. Later, when laying the stacks in the mold, the stack alignment device is pressed out due to the protruding portions of the vertical walls.

According to an embodiment, the stack alignment device is formed by a plurality of single alignment elements, each single alignment element having a horizontal base and one vertical wall and being mounted on the top sides of two adjacent stacks and putting a distance between the two adjacent stacks. Thus, instead of a single-piece stack alignment device for all of the stacks, there are several separate alignment elements, which each are preferably made as one piece. Each alignment element puts a predetermined distance between two adjacent stacks of pultruded planks. Thus, handling, mounting, and removing is improved, since a single alignment element has less weight, for example. The inserting of the single alignment elements is much easier, because only one vertical wall has to be pushed between two adjacent stacks of pultruded planks.

According to an embodiment, the horizontal base extends parallel along the main extension direction of the stacks and covers the top sides of the respective two adjacent stacks at least partially.

According to an alternative embodiment, the horizontal base extends traverse to the main extension direction of the stacks and covers the top sides of the two adjacent stacks at least partially, preferably entirely. The above functions and advantages with regard to a stack alignment device with several vertical walls similarly apply.

According to an embodiment, each single alignment element comprises a handle element extending away from the top sides of the stacks. The handle element is mounted to the horizontal base and extends away from the top side of the horizontal base in a direction opposite to the vertical wall. The above functions and advantages similarly apply.

According to an embodiment, the one vertical wall of each single alignment element has a length that is greater than a maximum thickness of the respective two adjacent stacks. The above functions and advantages similarly apply.

According to an embodiment, two or more stack alignment devices are provided being mounted at a distance along the main extension direction of the stacks. By distributing several alignment devices as described above over the entire length of the stacks along the extension direction, the predetermined alignment and distance between each adjacent stack is very effectively ensured.

According to an embodiment, in the step of providing several stacks of pultruded planks, the planks are supported on two or more frames having a free space between the frames, wherein the stack alignment device is mounted on the stacks between the frames. This leaves the undersides exposed between the frames due to the free space between the frames, allowing, for example, accessibility for attaching the holding means as already mentioned. In addition, stack alignment devices as described can be easily mounted in the free spaces between the frames with respect to the longitudinal extension so that, for example, the vertical walls can emerge unhindered at the undersides provided that they are longer than the maximum thickness as described above.

According to a second aspect, a stack alignment device for manufacturing a spar cap for a wind turbine rotor blade in a mold is disclosed. The stack alignment device comprises a horizontal base, at least one vertical wall extending from the horizontal base, and a handle element extending from the horizontal base in a direction opposite to the vertical wall. The stack alignment device is configured to put a distance between the stored, adjacent two stacks of pultruded planks, such that a gap is formed between each adjacent two stacks and the stacks remain in a predetermined alignment for transferring the stacks in the predetermined alignment into a mold.

The stack alignment device enables the above-mentioned functions and advantages. The embodiments, advantages and functions described with respect to the method according to the first aspect analogously apply.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic representation of a wind turbine according to one exemplary embodiment,
Fig. 2 shows a schematic representation of a wind turbine rotor blade,
Fig. 3 shows a schematic representation of a cross-section of a wind turbine rotor blade,
Fig. 4 shows a schematic cross-section of several stacks of pultruded planks,
Fig. 5 shows a schematic side view of a stack alignment device according to an embodiment of the invention,
Fig. 6 shows a schematic top view of the stack alignment device according to figure 5,
Fig. 7 shows a schematic cross-section of the several stacks with the stack alignment device being mounted,
Fig. 8 shows a schematic side view during placement of the stacks into a mold,
Fig. 9 and 10 schematically show the stack alignment device prior to its removal from the stacks,
Fig. 11 shows a schematic cross-section through the several stacks placed in the mold,
Fig. 12 shows a schematic flow diagram of a method of producing a spar cap according to an embodiment of the invention,
Fig. 13 and 14 show a stack alignment device according to a further embodiment of the invention, and
Fig. 15 and 16 show a stack alignment device according to a further embodiment of the invention.

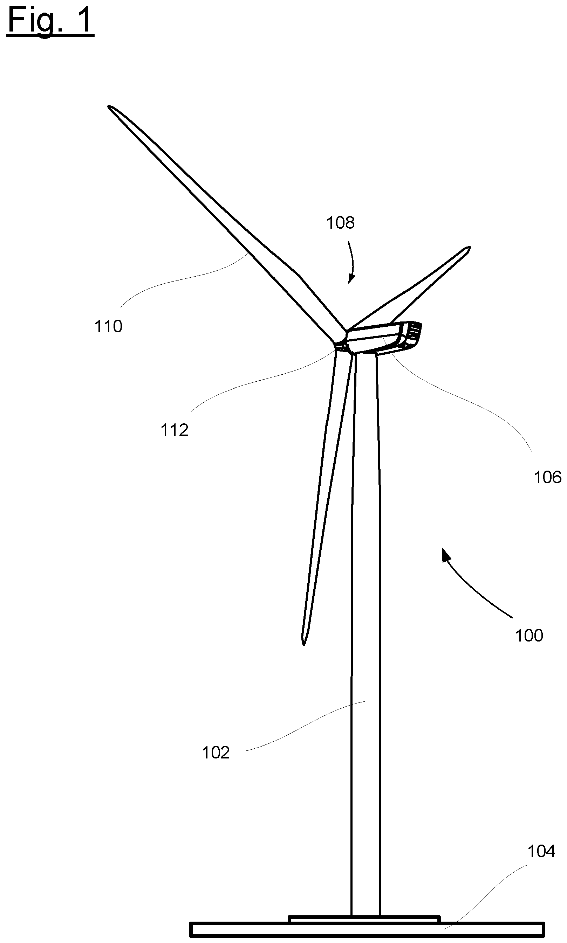

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

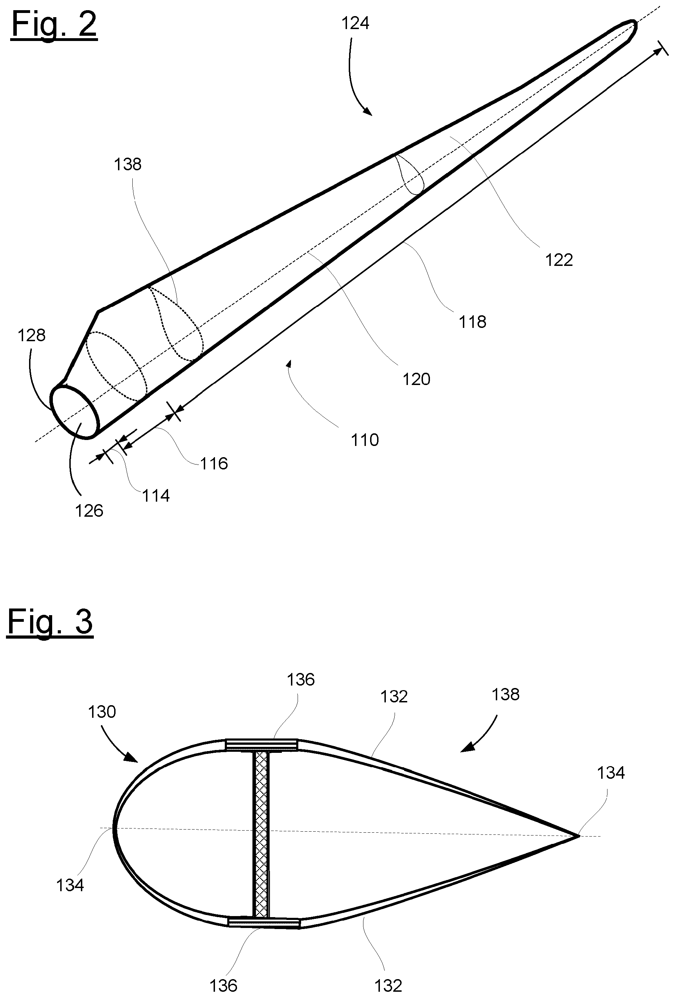

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender.

Figure 3 shows a schematic cross section profile 138 (see figure 2) of the wind turbine rotor blade 110 running traverse to the longitudinal direction 120. The rotor blade 110 comprises a shell 130, which is comprised by two half-shells 132, wherein one half-shell 132 corresponds to the pressure side 122 and the other one to the suction side 124. The two half-shells 132 are firmly connected to each other along the longitudinal axis at opposite connecting surfaces 134. Each half-shell 132 has a spar cap 136 embedded in the shell-structure. A spar cap 136 can also be generally named "main laminate" and carries main loads during operation of the rotor blade 110.

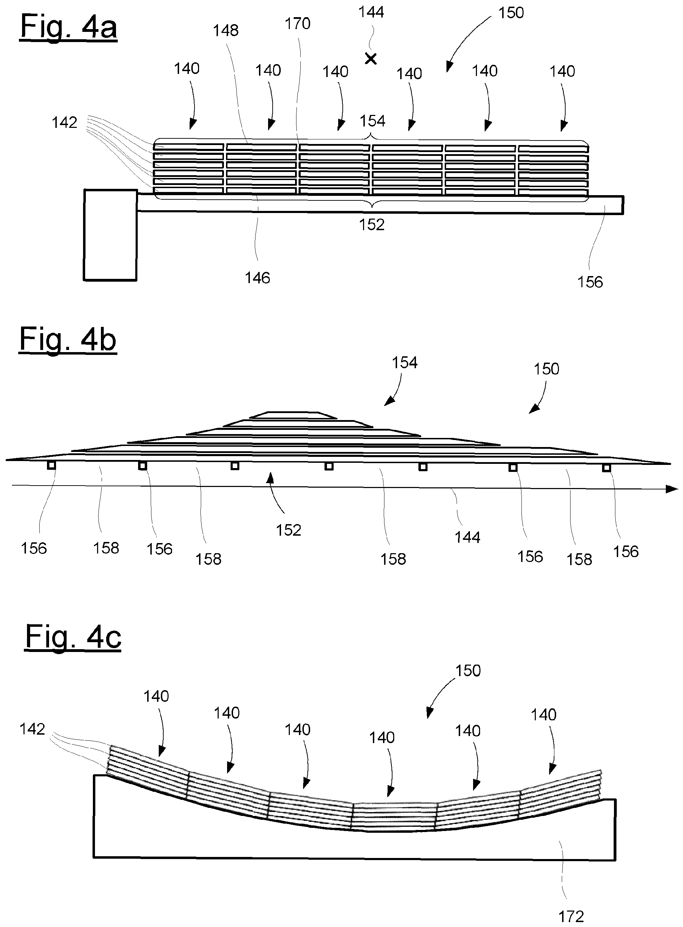

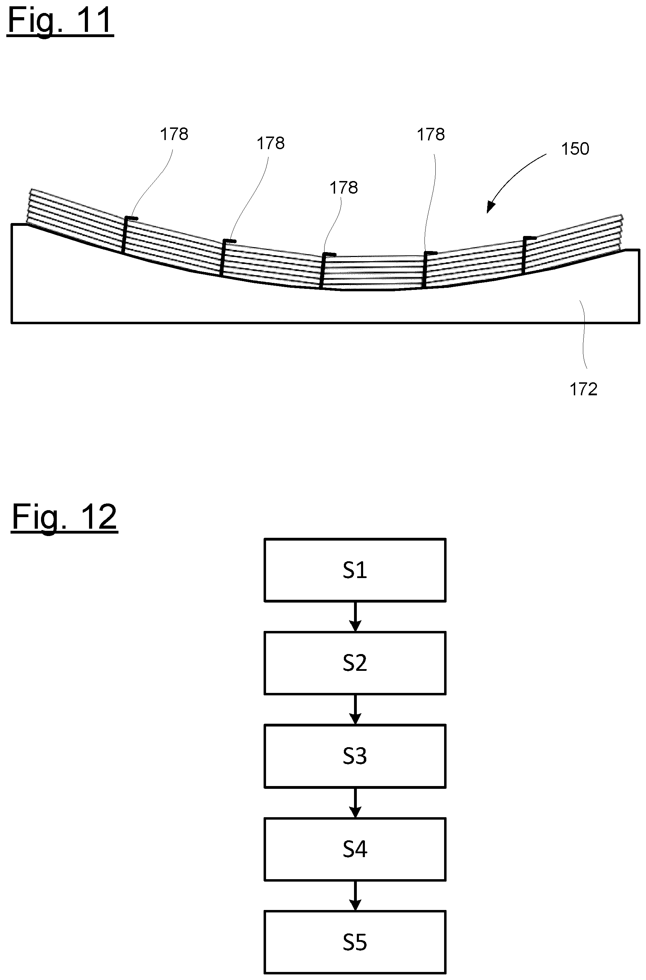

In the following, a method for manufacturing a spar cap 136 (or main laminate respectively) according to an embodiment of the invention is described with the aid of figures 4 to 12, wherein figure 12 shows a schematic flow diagram of the method.

With reference to figures 4a and 4b, in a first step S1, several stacks 140 of pultruded planks 142 (only referenced in the figure 4a for the left stack 140) are provided. Figure 4a refers to a schematic cross-section of the spar cap layed in the storage area, whereas figure 4b refers to a schematic side view. Each stack 140 runs along a main extension direction 144, which runs normal to the image plane of figure 4a (only one main extension direction 144 is referenced in figure 4a for the sake of clarity). Each stack 140 has a bottom side 146 and a top side 148 (only one reference sign each of 146 and 148 is shown in figure 4a for the sake of clarity). The stacks 140 with their main extension directions 144 are arranged side by side in a crosswise direction of the rotor blade 110. In other words, together the stacks 140 form a total stack or a stack package 150. The stacks 140 together, or respectively the stack package 150, has a common bottom side 152 and a common top side 154.

As already described and not shown for the sake of clarity, the stack package 150 is stored in a storage area. For this purpose, the single pultruded planks 142 are transferred from a cutting machine to the storage area to form the stack package 150. As indicated schematically in figure 4a, the planks 142 and stacks 140 are supported at several frames 156. The frames 156, for example, have an arm-like design. There is free space 158 between two adjacent frames 156.

As shown in figures 4a and 4b, each stack 140 comprises six planks 142. However, in alternative embodiments, the stacks 140 can have different amounts of planks 142. Further, the stacks 140 and the planks 142 can have different designs, lengths, thicknesses, and the like, which are not detailed herein.

Fig. 4c shows the arrangement of the stacks from figure 4a after the transfer into the spar cap mold. The spar cap mold 172 adapts the predetermined shape of the spar cap. That means, the surface of the mold corresponds to the curvature of the aerodynamic surface of the rotor blade.

However, even if the alignment of the planks 142 (and thus the stacks 140) has to adapted to the mold to which they will be transferred, the lateral alignment of the stacks must be maintained. Thus, in a second step S2 several stack alignment devices 160 are mounted onto the stacks 140, i.e. the stack package 150.

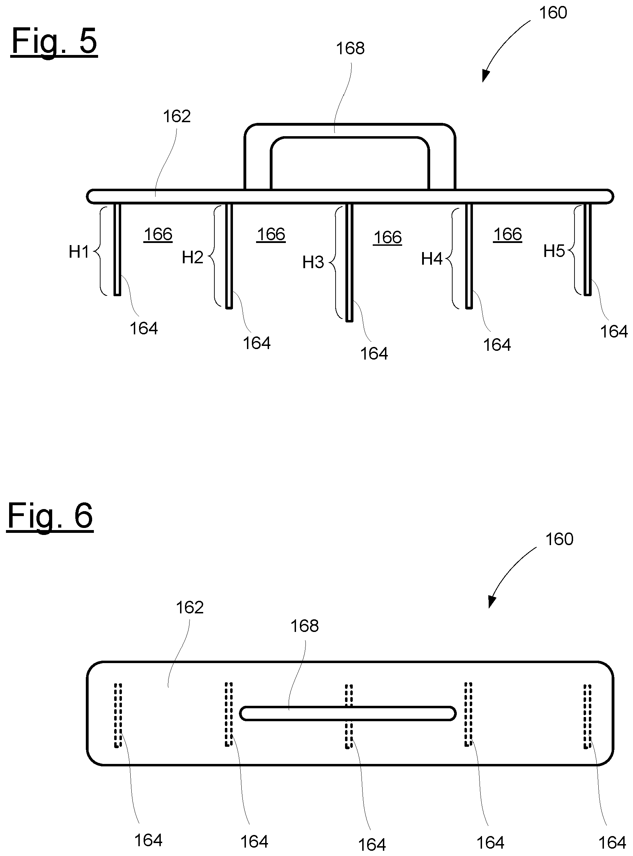

As shown in the figures 5 and 6, showing a schematic side view and a schematic top view, one stack alignment device 160 has a comb-like structure and comprises a horizontal base 162. Several vertical walls 164 extend from the horizontal base 162. The stack alignment device 160 is configured such that the horizontal base 162 extends traverse to the main extension directions 144 of the stacks 140 in the intended use. Each two adjacent vertical walls 164 and a respective portion of the horizontal base 162 define a U-shaped receiving section 166. Each U-shaped receiving section 166 is open towards the bottom sides 146 of the stacks 140 and is configured to accommodate a respective stack 140 of planks 142. Opposite to the vertical walls 164, the stack alignment device 160 has a handle element 168, which can be gripped by a worker for mounting and dismounting. As can be further seen, the vertical walls 164 differ with respect to their lengths. In other words, the vertical walls 164 have different lengths H1 to H5 (also named "heights"). Each length H1 to H5 is adapted to an inner contour of the mold (further details below).

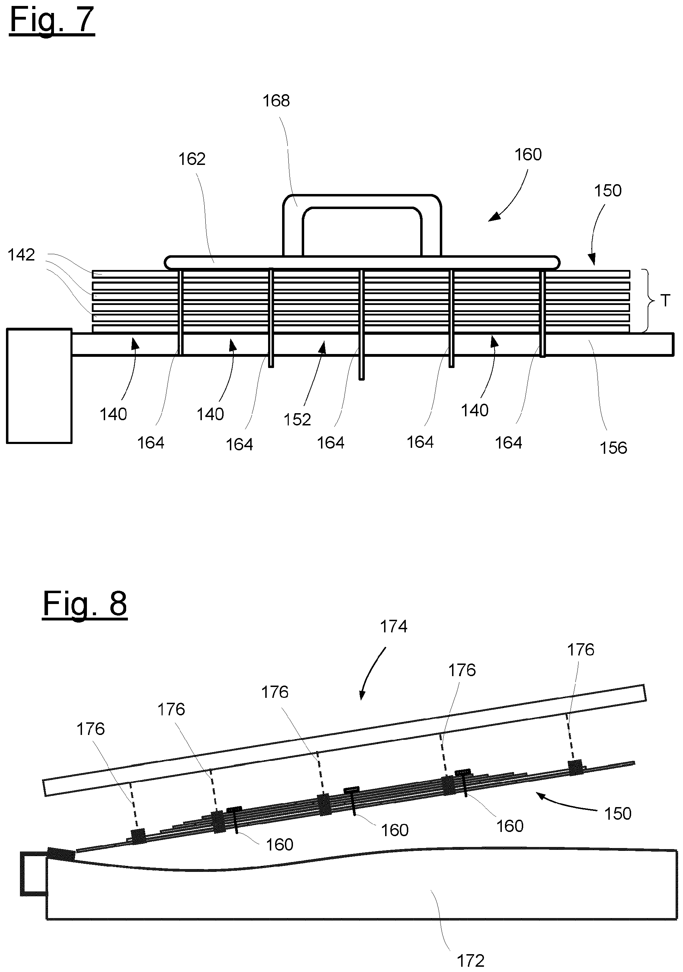

The stack alignment device 160 is mounted, e.g. by a worker, from the common top side 154 onto the stack package 150 as schematically indicated in figure 7. The stack alignment device 160 is mounted such that it puts a distance between each adjacent two stacks 140. In this regard, the vertical walls 164 are arranged, e.g. inserted, between each two adjacent stacks 140. Thus, a predetermined gap 170 is formed between each adjacent two stacks 140. A plurality of stack alignment devices 160 is distributed at a distance to each other along the extension directions 144 of the stacks 140. In particular, they are mounted at positions between two frames 156, i.e. in regions of the free spaces 158.

By mounting the stack alignment devices 160, the stacks 140 and the planks 142 remain in a predetermined alignment, in particular during the subsequent transfer into a mold.

As can be seen further from figure 7, each length H1 to H5 of each vertical wall 164 is greater than a maximum thickness T of the stacks 140. Thus, each vertical wall 164 protrudes out of the stacks at the common bottom side 152.

In a next step S3, the stacks 140, i.e. the stack package 150, are transferred together with the stack alignment devices 160 into a mold 172 for manufacturing a spar cap 136, thereby maintaining the predetermined alignment. The transfer is done by lifting means 174, e.g. by a sling traverse as shown in figure 8. Several holding means 176 of the lifting means 174 are mounted to the stack package 150 to safely transfer the stacks 140 to the mold and to lay them down into the mold 172. No further details of the lifting means 174 are given here for the sake of clarity.

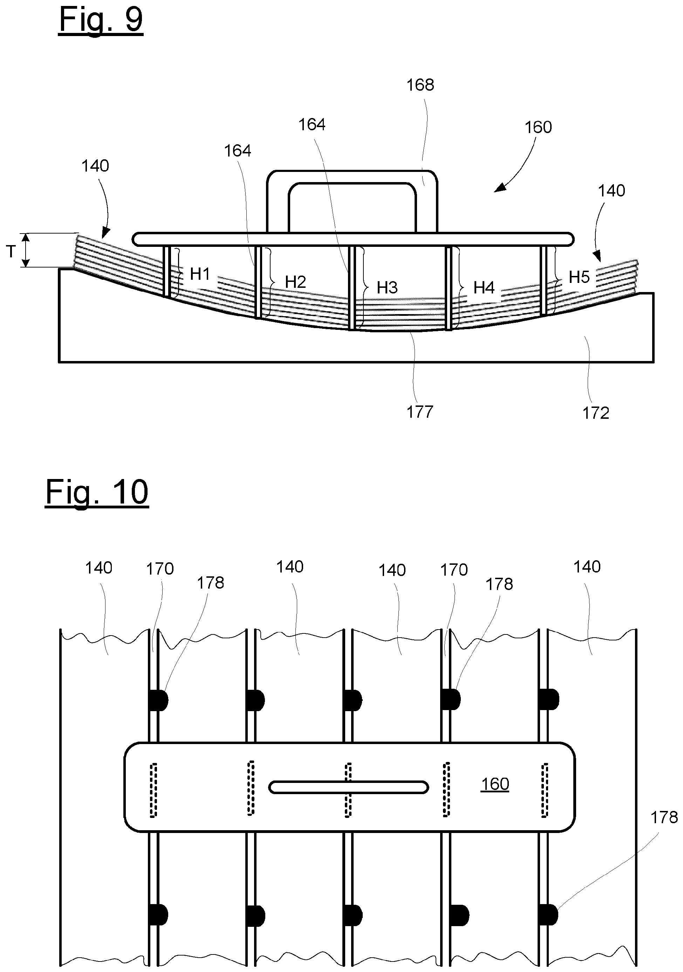

Figure 9 exemplarily shows a stack alignment device 160 and the stacks 140 arranged in the mold 172 in a schematic cross-section. The mold 172 has an inner surface with a contour 177. As can be seen, the different lengths H1 to H5 of the vertical walls 164 are adapted to the inner contour 177, which is typically curved.

In a next step S4, the stack alignment devices 160 are removed, in particular manually by gripping the handle elements 168 and pulling them out of the stacks 140. As shown in figure 9, due to fact that each length H1 to H5 of the vertical walls 164 is greater than the maximum thickness of each stack 140, the stack alignment devices 160 are pushed outwards after having the stacks 140 placed in the mold 172. Thus, removal of the alignment devices 140 is made more feasible.

In a next step, the stacks 140 are interconnected by means of resin infusion in the mold to manufacture the final spar cap 136.

Optionally, in an intermediate step after having transferred the stacks 140 into the mold 172 and prior to removal of the alignment devices 160, additional spacer elements 178 are put into respective gaps 170 as shown in figure 10. These spacer elements 178 are intended to stay in the final product and are not removed prior to resin infusion. Figure 11 schematically shows a lengthwise cross-section of the spar cap mold with stacks arranged therein, wherein the spacer elements 178 can be seen. The spacer elements 178 ensure that sufficient resin can reach between the stacks 140 of planks 142. Further details of figure 11 regarding the mold 172 and components for the resin infusion are not described for the sake of clarity.

The described method and stack alignment devices 160 enable the above-mentioned functions and advantages.

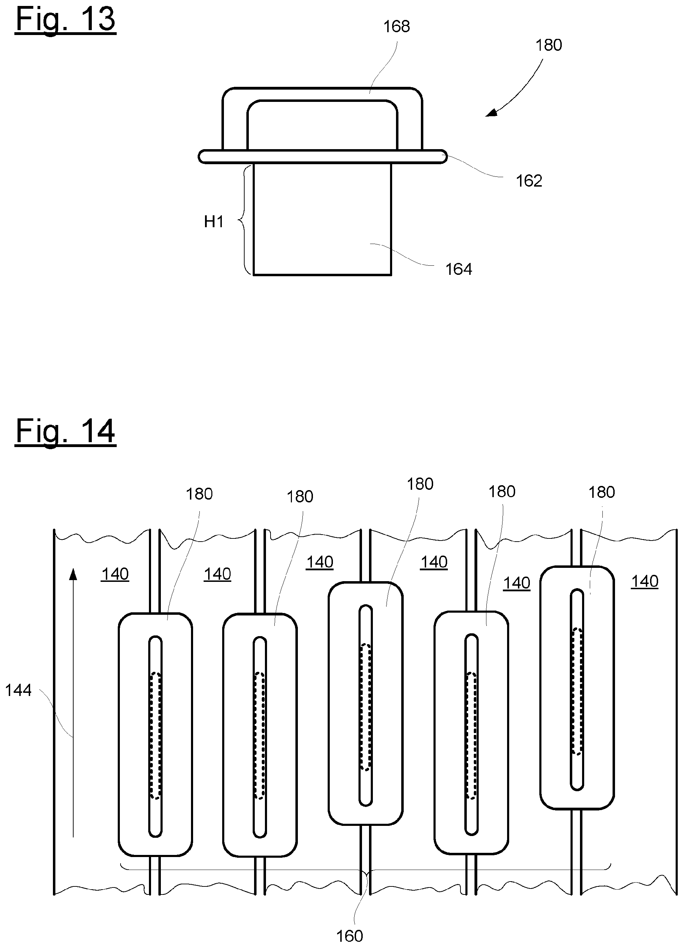

Figures 13 and 14 refer to a stack alignment device 160 according to another embodiment of the invention. Unless otherwise stated, the above applies analogously. In particular, we refer to the above description regarding the stacks 140, the planks 142 and the method for manufacturing the spar cap 136.

In contrast to the above-described embodiment, the stack alignment device 160 comprises several single alignment elements 180, each of which are mounted from the top sides 148 of two adjacent stacks 140 and put a distance between the two adjacent stacks 140. As can be seen from figure 13, each single alignment element 180 has a horizontal base 162 and one vertical wall 164. With regard to figure 14, the horizontal base 162 as well as the vertical walls 164 extend parallel along the main extension directions 144 (one is indicated exemplarily in figure 14) of the stacks 140 and cover the top sides 148 of the respective two adjacent stacks 140 at least partially.

The vertical wall 164 of each single alignment element 180 has a length H1 being greater than the maximum thickness T of the two adjacent, respective stacks 140. Optionally, the lengths H1 of all single alignment elements 180 are different in order to follow the inner contour 177 of the mold 172, as described above.

Such single alignment elements 180 enable the above-mentioned functions and advantages. In particular, handling of the single alignment elements 180 is easier compared to a stack alignment device 160 as described in accordance with figures 4 to 12.

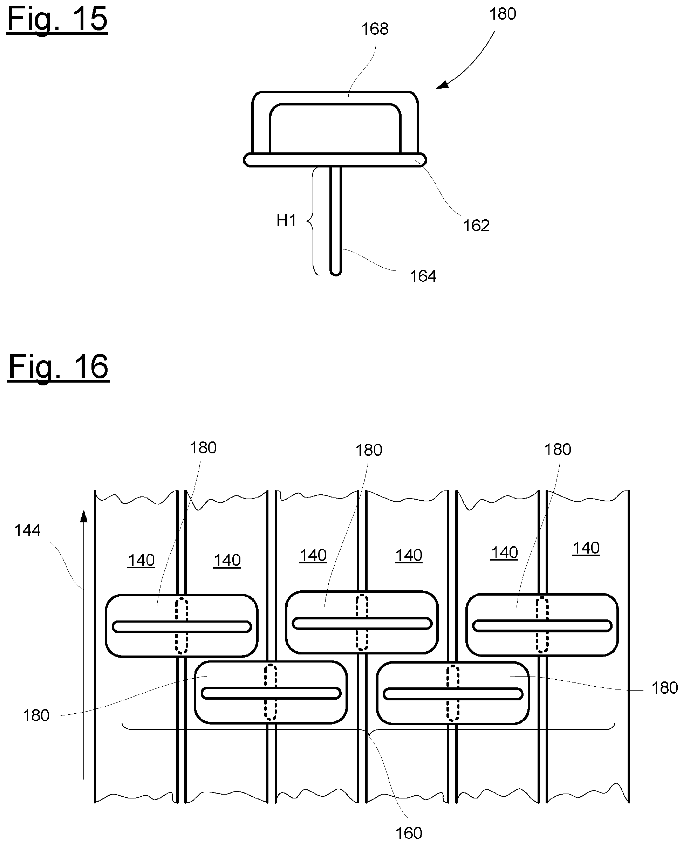

Figures 15 and 16 refer to a stack alignment device 160 according to another embodiment of the invention. Unless otherwise stated, with regard to figures 13 and 14 the above analogously applies.

Similar to the embodiment according to figures 13 and 14, the stack alignment device 160 comprises several single alignment elements 180, each of which are mounted from the top sides 148 of two adjacent stacks 140 and put a distance between the two adjacent stacks 140.

In contrast to the embodiment according to figures 13 and 14, the one vertical wall 164 of a single alignment element 180 is rotated at 90°. With regard to figure 16, the horizontal base 162 extends traverse to the main extension directions 144 (one is indicated exemplarily in figure 16) of the stacks 140 and covers the top sides 148 of the respective two adjacent stacks 140 at least partially. However, each vertical wall 164 runs in parallel to main extension directions 144 of the stacks 140.

As above, the vertical wall 164 of each single alignment element 180 has a length H1 being greater than the maximum thickness T of the two adjacent, respective stacks 140.

Optionally, the lengths H1 of all single alignment elements 180 are different in order to follow the inner contour 177 of the mold 172, as described above.

Such single alignment elements 180 enable the above-mentioned functions and advantages.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection
- 130: shell
- 132: half-shell
- 134: connecting surface
- 136: spar cap
- 138: cross section profile
- 140: stack
- 142: pultruded plank
- 144: main extension direction
- 146: bottom side
- 148: top side
- 150: stack package
- 152: common bottom side
- 154: common top side
- 156: frame
- 158: free space
- 160: stack alignment device
- 162: horizontal base
- 164: vertical wall
- 166: U-shaped receiving section
- 168: handle element
- 170: gap
- 172: mold
- 174: lifting means
- 176: holding means
- 177: inner contour
- 178: spacer element
- 180: single alignment element
- H1-H5: length
- S1-S5: step
- T: thickness

## Claims

1. Method for manufacturing a spar cap (136) for a wind turbine rotor blade (110) in a mold (172), the method comprising the following steps:
- providing several stacks (140) of pultruded planks (142), wherein each stack (140) comprises a main extension direction (144), a top side (148) and a bottom side (146), wherein the stacks (140) are arranged side by side along their main extension direction (144),
- mounting a stack alignment device (160) onto the stacks (140), the stack alignment device (160) being configured to put a distance between each adjacent two stacks (140), such that a gap (170) is formed between each adjacent two stacks (140) and the stacks (140) remain in predetermined alignment,
- transferring the stacks (140) with the stack alignment device into a mold (172), thereby maintaining the predetermined alignment,
- removing the stack alignment device (160), and
- connecting the stacks (140) by means of resin infusion in the mold (172) to manufacture the spar cap (136).

2. Method according to claim 1, wherein the stack alignment device (160) is mounted from the top sides (148) of the stacks (140).

3. Method according to any one of the preceding claims, wherein after the step of transferring the stacks (140) and prior to the step of removing the stack alignment device (160), spacer elements (178) are placed between each adjacent two stacks (140) in the respective gap (170), the spacer elements (178) being configured to remain in the manufactured spar cap (136).

4. Method according to any one of the preceding claims, wherein the stack alignment device (160) comprises a horizontal base (162) and several vertical walls (164) extending from the horizontal base (162), wherein the horizontal base (162) extends traverse to the main extension direction (144) of the stacks (140) and covers the top sides (148) of the stacks (140) at least partially and wherein two adjacent vertical walls (164) and a respective portion of the horizontal base (162) define a U-shaped receiving section (166), each U-shaped receiving section (166) being open towards the bottom sides (146) of the stacks (140) and being configured to accommodate a stack (140) of planks (142).

5. Method according to claim 4, wherein the horizontal base (162) comprises a handle element (168) extending away from the top sides (148) of the stacks.

6. Method according to claim 4 or 5, wherein the vertical walls (164) differ with respect to their length (H1 to H5), and wherein a length (H1 to H5) of each vertical wall (164) is adapted to a contour (177) of the inner surface of the mold (172).

7. Method according to any one of claims 4 to 6, wherein each vertical wall (164) has a length (H1 to H5) that is greater than a maximum thickness (T) of the stacks (140).

8. Method according to any one of claims 1 to 3, wherein the stack alignment device (160) is formed by a plurality of single alignment elements (180), each single alignment element (180) having a horizontal base (162) and one vertical wall (164) and being mounted on the top sides (148) of two adjacent stacks (140) and putting a distance between the two adjacent stacks (140).

9. Method according to claim 8, wherein the horizontal base (162) extends parallel along the main extension direction (144) of the stacks (140) and covers the top sides (148) of the respective two adjacent stacks (140) at least partially.

10. Method according to claim 8, wherein the horizontal base (162) extends traverse to the main extension direction (144) of the stacks (140) and covers the top sides (148) of the two adjacent stacks (140) at least partially, preferably entirely.

11. Method according to any one of claims 8 to 10, wherein each single alignment element (180) comprises a handle element (168) extending away from the top sides (148) of the stacks (140).

12. Method according to any one of claims 8 to 11, wherein the one vertical wall (164) of each single alignment element (180) has a length (H1) that is greater than a maximum thickness (T) of the respective two adjacent stacks (144).

13. Method according to any one of the preceding claims, wherein two or more stack alignment devices (160) are provided being mounted at a distance along the main extension direction (144) of the stacks (140).

14. Method according to any one of the preceding claims, wherein in the step of providing several stacks (140) of pultruded planks (142), the planks (142) are supported on two or more frames (156) having a free space (158) between the frames (156), wherein the stack alignment device (160) is mounted on the stacks (140) between the frames (156).

15. Stack alignment device for manufacturing a spar cap (136) for a wind turbine rotor blade (110) in a mold (172), comprising
- a horizontal base (162), **characterised by**
- at least one vertical wall (164) extending from the horizontal base (162), and
- a handle element (168) extending from the horizontal base (162) in a direction opposite to the vertical wall (162),
wherein
the stack alignment device (160) is configured to put a distance between the stored, adjacent two stacks (140) of pultruded planks (142), such that a gap (170) is formed between each adjacent two stacks (140) and the stacks (140) remain in a predetermined alignment for transferring the stacks (140) in the predetermined alignment into a mold (172).

## Patentansprüche

1. Verfahren zur Herstellung eines Gurts (136) für ein Windturbinenrotorblatt (110) in einer Form (172), wobei das Verfahren die folgenden Schritte umfasst:
- Bereitstellen mehrerer Stapel (140) aus pultrudierten Planken (142), wobei jeder Stapel (140) eine Haupterstreckungsrichtung (144), eine Oberseite (148) und eine Unterseite (146) aufweist, wobei die Stapel (140) entlang ihrer Haupterstreckungsrichtung (144) nebeneinander angeordnet sind,
- Anbringen einer Stapelausrichtungsvorrichtung (160) an den Stapeln (140), wobei die Stapelausrichtungsvorrichtung (160) dazu eingerichtet ist, einen Abstand zwischen jeweils zwei benachbarten Stapeln (140) herzustellen, sodass zwischen jeweils zwei benachbarten Stapeln (140) ein Spalt (170) gebildet wird und die Stapel (140) in vorbestimmter Ausrichtung verbleiben,
- Überführen der Stapel (140) mit der Stapelausrichtungsvorrichtung in eine Form (172), unter Beibehaltung der vorbestimmten Ausrichtung,
- Entfernen der Stapelausrichtungsvorrichtung (160), und
- Verbinden der Stapel (140) mittels Harzinfusion in der Form (172), um den Gurt (136) herzustellen.

2. Verfahren nach Anspruch 1, wobei die Stapelausrichtungsvorrichtung (160) von den Oberseiten (148) der Stapel (140) her angebracht wird.

3. Verfahren nach einem der vorhergehenden Ansprüche, wobei nach dem Schritt des Überführens der Stapel (140) und vor dem Schritt des Entfernens der Stapelausrichtungsvorrichtung (160) Abstandselemente (178) zwischen jeweils zwei benachbarten Stapeln (140) in dem jeweiligen Spalt (170) platziert werden, wobei die Abstandselemente (178) dazu eingerichtet sind, in dem hergestellten Gurt (136) zu verbleiben.

4. Verfahren nach einem der vorhergehenden Ansprüche, wobei die Stapelausrichtungsvorrichtung (160) eine horizontale Basis (162) und mehrere sich von der horizontalen Basis (162) erstreckende vertikale Wände (164) aufweist, wobei sich die horizontale Basis (162) quer zu der Haupterstreckungsrichtung (144) der Stapel (140) erstreckt und die Oberseiten (148) der Stapel (140) zumindest teilweise bedeckt und wobei zwei benachbarte vertikale Wände (164) und ein jeweiliger Abschnitt der horizontalen Basis (162) einen U-förmigen Aufnahmeabschnitt (166) definieren, wobei jeder U-förmige Aufnahmeabschnitt (166) zu den Unterseiten (146) der Stapel (140) hin offen ist und dazu eingerichtet ist, einen Stapel (140) aus Planken (142) aufzunehmen.

5. Verfahren nach Anspruch 4, wobei die horizontale Basis (162) ein Griffelement (168) aufweist, das sich von den Oberseiten (148) der Stapel weg erstreckt.

6. Verfahren nach Anspruch 4 oder 5, wobei sich die vertikalen Wände (164) hinsichtlich ihrer Länge (H1 bis H5) unterscheiden, und wobei eine Länge (H1 bis H5) jeder vertikalen Wand (164) an eine Kontur (177) der Innenfläche der Form (172) angepasst ist.

7. Verfahren nach einem der Ansprüche 4 bis 6, wobei jede vertikale Wand (164) eine Länge (H1 bis H5) aufweist, die größer als eine maximale Dicke (T) der Stapel (140) ist.

8. Verfahren nach einem der Ansprüche 1 bis 3, wobei die Stapelausrichtungsvorrichtung (160) durch eine Mehrzahl von Einzelausrichtungselementen (180) gebildet ist, wobei jedes Einzelausrichtungselement (180) eine horizontale Basis (162) und eine vertikale Wand (164) aufweist und auf den Oberseiten (148) zweier benachbarter Stapel (140) angebracht ist und einen Abstand zwischen den zwei benachbarten Stapeln (140) herstellt.

9. Verfahren nach Anspruch 8, wobei sich die horizontale Basis (162) parallel entlang der Haupterstreckungsrichtung (144) der Stapel (140) erstreckt und die Oberseiten (148) der jeweiligen zwei benachbarten Stapel (140) zumindest teilweise bedeckt.

10. Verfahren nach Anspruch 8, wobei sich die horizontale Basis (162) quer zu der Haupterstreckungsrichtung (144) der Stapel (140) erstreckt und die Oberseiten (148) der zwei benachbarten Stapel (140) zumindest teilweise, vorzugsweise vollständig, bedeckt.

11. Verfahren nach einem der Ansprüche 8 bis 10, wobei jedes Einzelausrichtungselement (180) ein Griffelement (168) aufweist, das sich von den Oberseiten (148) der Stapel (140) weg erstreckt.

12. Verfahren nach einem der Ansprüche 8 bis 11, wobei die eine vertikale Wand (164) jedes Einzelausrichtungselements (180) eine Länge (H1) aufweist, die größer als eine maximale Dicke (T) der jeweiligen zwei benachbarten Stapel (144) ist.

13. Verfahren nach einem der vorhergehenden Ansprüche, wobei zwei oder mehr Stapelausrichtungsvorrichtungen (160) vorgesehen sind, die in einem Abstand entlang der Haupterstreckungsrichtung (144) der Stapel (140) angebracht sind.

14. Verfahren nach einem der vorhergehenden Ansprüche, wobei in dem Schritt des Bereitstellens mehrerer Stapel (140) aus pultrudierten Planken (142) die Planken (142) auf zwei oder mehr Rahmen (156) abgestützt werden, die einen Freiraum (158) zwischen den Rahmen (156) aufweisen, wobei die Stapelausrichtungsvorrichtung (160) zwischen den Rahmen (156) an den Stapeln (140) angebracht wird.

15. Stapelausrichtungsvorrichtung zur Herstellung eines Gurts (136) für ein Windturbinenrotorblatt (110) in einer Form (172), aufweisend
- eine horizontale Basis (162), **gekennzeichnet durch**
- mindestens eine vertikale Wand (164), die sich von der horizontalen Basis (162) erstreckt, und
- ein Griffelement (168), das sich von der horizontalen Basis (162) in einer der vertikalen Wand (162) entgegengesetzten Richtung erstreckt,
wobei
die Stapelausrichtungsvorrichtung (160) dazu eingerichtet ist, einen Abstand zwischen den gelagerten, zwei benachbarten Stapeln (140) aus pultrudierten Planken (142) herzustellen, sodass zwischen jeweils zwei benachbarten Stapeln (140) ein Spalt (170) gebildet wird und die Stapel (140) in einer vorbestimmten Ausrichtung verbleiben, zum Überführen der Stapel (140) in der vorbestimmten Ausrichtung in eine Form (172).

## Revendications

1. Procédé de fabrication d'un capuchon de longeron (136) pour une pale de rotor d'éolienne (110) dans un moule (172), le procédé comprenant les étapes suivantes :
- fourniture de plusieurs empilements (140) de planches pultrudées (142), dans lequel chaque empilement (140) comprend une direction d'extension principale (144), une face supérieure (148) et une face inférieure (146), dans lequel les empilements (140) sont agencés côte à côte le long de leur direction d'extension principale (144),
- montage d'un dispositif d'alignement d'empilement (160) sur les empilements (140), le dispositif d'alignement d'empilement (160) étant configuré pour établir une distance entre chaque paire d'empilements (140) adjacents, de telle sorte qu'un interstice (170) est formé entre chaque paire d'empilements (140) adjacents et que les empilements (140) restent dans un alignement prédéterminé,
- transfert des empilements (140) avec le dispositif d'alignement d'empilement dans un moule (172), en maintenant ainsi l'alignement prédéterminé,
- retrait du dispositif d'alignement d'empilement (160), et
- liaison des empilements (140) au moyen d'une infusion de résine dans le moule (172) pour fabriquer le capuchon de longeron (136).

2. Procédé selon la revendication 1, dans lequel le dispositif d'alignement d'empilement (160) est monté depuis les faces supérieures (148) des empilements (140).

3. Procédé selon l'une quelconque des revendications précédentes, dans lequel, après l'étape de transfert des empilements (140) et avant l'étape de retrait du dispositif d'alignement d'empilement (160), des éléments d'espacement (178) sont placés entre chaque paire d'empilements (140) adjacents dans l'interstice (170) respectif, les éléments d'espacement (178) étant configurés pour rester dans le capuchon de longeron (136) fabriqué.

4. Procédé selon l'une quelconque des revendications précédentes, dans lequel le dispositif d'alignement d'empilement (160) comprend une base horizontale (162) et plusieurs parois verticales (164) s'étendant à partir de la base horizontale (162), dans lequel la base horizontale (162) s'étend transversalement à la direction d'extension principale (144) des empilements (140) et recouvre au moins partiellement les faces supérieures (148) des empilements (140) et dans lequel deux parois verticales (164) adjacentes et une partie respective de la base horizontale (162) définissent une section de réception en forme de U (166), chaque section de réception en forme de U (166) étant ouverte vers les faces inférieures (146) des empilements (140) et étant configurée pour recevoir un empilement (140) de planches (142).

5. Procédé selon la revendication 4, dans lequel la base horizontale (162) comprend un élément de poignée (168) s'étendant en s'éloignant des faces supérieures (148) des empilements.

6. Procédé selon la revendication 4 ou 5, dans lequel les parois verticales (164) diffèrent en ce qui concerne leur longueur (H1 à H5), et dans lequel une longueur (H1 à H5) de chaque paroi verticale (164) est adaptée à un contour (177) de la surface intérieure du moule (172).

7. Procédé selon l'une quelconque des revendications 4 à 6, dans lequel chaque paroi verticale (164) présente une longueur (H1 à H5) qui est supérieure à une épaisseur maximale (T) des empilements (140).

8. Procédé selon l'une quelconque des revendications 1 à 3, dans lequel le dispositif d'alignement d'empilement (160) est formé par une pluralité d'éléments d'alignement individuels (180), chaque élément d'alignement individuel (180) présentant une base horizontale (162) et une paroi verticale (164) unique et étant monté sur les faces supérieures (148) de deux empilements (140) adjacents et établissant une distance entre les deux empilements (140) adjacents.

9. Procédé selon la revendication 8, dans lequel la base horizontale (162) s'étend parallèlement le long de la direction d'extension principale (144) des empilements (140) et recouvre au moins partiellement les faces supérieures (148) des deux empilements (140) adjacents respectifs.

10. Procédé selon la revendication 8, dans lequel la base horizontale (162) s'étend transversalement à la direction d'extension principale (144) des empilements (140) et recouvre au moins partiellement, de préférence entièrement, les faces supérieures (148) des deux empilements (140) adjacents.

11. Procédé selon l'une quelconque des revendications 8 à 10, dans lequel chaque élément d'alignement individuel (180) comprend un élément de poignée (168) s'étendant en s'éloignant des faces supérieures (148) des empilements (140).

12. Procédé selon l'une quelconque des revendications 8 à 11, dans lequel la paroi verticale (164) unique de chaque élément d'alignement individuel (180) présente une longueur (H1) qui est supérieure à une épaisseur maximale (T) des deux empilements (144) adjacents respectifs.

13. Procédé selon l'une quelconque des revendications précédentes, dans lequel deux dispositifs d'alignement d'empilement (160) ou plus sont prévus, lesquels sont montés à une distance le long de la direction d'extension principale (144) des empilements (140).

14. Procédé selon l'une quelconque des revendications précédentes, dans lequel, à l'étape de fourniture de plusieurs empilements (140) de planches pultrudées (142), les planches (142) sont supportées sur deux cadres (156) ou plus présentant un espace libre (158) entre les cadres (156), dans lequel le dispositif d'alignement d'empilement (160) est monté sur les empilements (140) entre les cadres (156).

15. Dispositif d'alignement d'empilement pour la fabrication d'un capuchon de longeron (136) pour une pale de rotor d'éolienne (110) dans un moule (172), comprenant
- une base horizontale (162), **caractérisé par**
- au moins une paroi verticale (164) s'étendant à partir de la base horizontale (162), et
- un élément de poignée (168) s'étendant à partir de la base horizontale (162) dans une direction opposée à la paroi verticale (162),
dans lequel
le dispositif d'alignement d'empilement (160) est configuré pour établir une distance entre les deux empilements (140) adjacents stockés de planches pultrudées (142), de telle sorte qu'un interstice (170) est formé entre chaque paire d'empilements (140) adjacents et que les empilements (140) restent dans un alignement prédéterminé pour le transfert des empilements (140) dans l'alignement prédéterminé dans un moule (172).
